# EUROPÄISCHE PATENTANMELDUNG

(11) **EP 1 481 847 A2**
(43) Veröffentlichungstag der Anmeldung: **01.12.2004**
(21) Anmeldenummer: 04012867.0
(22) Anmeldetag: 29.05.2004
(51) Int. Cl.: B60Q 3/02

(54) **Universalleuchte**

(30) Priorität: 30.05.2003 DE 20308466 U
(71) Anmelder: FER Fahrzeugelektrik GmbH, 99819 Eisenach (DE)
(72) Erfinder: Lantzsch, Klaus, 99817 Eisenach (DE); Gräser, Stefan, 99192 Neudietendorf (DE)
(74) Vertreter: Strasser, Wolfgang, Dipl.-Phys.

(57) **Zusammenfassung**

Eine Universalleuchte umfasst: ein Leuchtmodul (1') mit einer Lichtquelle, eine stationäre Halterung (15), mit der das Leuchtmodul in leicht lösbarer Weise verbindbar ist, und eine Stromzuführungs-Einrichtung, die zwei an der Halterung vorgesehene elektrische Kontakte (9'), die mit einer Stromversorgung in leitender Verbindung stehen, und zwei an dem Leuchtmodul vorgesehene elektrische Kontakte (7') umfaßt, die mit der Lichtquelle in leitender Verbindung stehen und dann, wenn das Leuchtmodul mit der Halterung verbunden ist, mit deren elektrischen Kontakten in leitender Verbindung stehen, wobei wenigstens ein elektrischer Kontakt an der Halterung und wenigstens ein elektrischer Kontakt am Leuchtmodul als Magnetanordnung zum Festhalten des Leuchtmoduls an der Halterung ausgebildet sind. Zur Erzielung einer universellen Verwendbarkeit dient ein Zusatzmodul (17), das einen Speicher für elektrische Energie und zwei elektrische Kontakte umfaßt und mit dem das Leuchtmodul in leicht lösbarer Weise so verbindbar ist, dass der Speicher für elektrische Energie die Lichtquelle mit elektrischer Energie versorgen kann.

## Beschreibung

Die Erfindung betrifft eine Universalleuchte, insbesondere zur Verwendung in einem Fahrzeug, der im Oberbegriff von Anspruch 1 genannten Art.

Es sind Innenraumleuchten insbesondere für Kraftfahrzeuge bekannt, deren Helligkeit beispielsweise mit Hilfe eines Dimmers oder Regelwiderstandes verändert werden kann. Andere bekannte Leuchten weisen eine vor der Lichtquelle angeordnete Optik auf, die mechanisch verstellbar ist, um den Öffnungswinkel des von der Leuchte abgegebenen Lichtkegels zu verändern. In allen diesen Fällen ist ein vergleichsweise großer technischer Aufwand erforderlich, um die Lichtverhältnisse an den jeweiligen momentanen Bedarf anpassen zu können.

Dem gegenüber liegt der Erfindung die Aufgabe zu Grunde, eine Universalleuchte der eingangs genannten Art so weiter zu bilden, dass sie mit einem sehr geringem technisehen Aufwand an unterschiedliche Lichtanforderungen angepaßt und in vielseitiger Weise variiert und eingesetzt werden kann.

Zur Lösung dieser Aufgabe sieht die Erfindung die im Anspruch 1 niedergelegten Merkmale vor.

Gemäß der Erfindung besteht eine Universalleuchte im wesentlichen aus wenigstens drei Hauptkomponenten, nämlich wenigstens einem beweglichen Leuchtmodul, das die Leuchteigenschaften der Universalleuchte definiert, wenigstens einer stationären Halterung für das bewegliche Leuchtmodul und wenigstens einem Zusatzmodul, das einen elektrischen Energiespeicher enthält und mit dem das Leuchtmodul zur Bildung einer Handlampe verbunden werden kann, wenn es von der stationären Halterung abgenommen worden ist. Dadurch, dass diese Hauptkomponenten jeweils in leicht lösbarer Weise miteinander verbunden sind, können für eine Halterung mehrere Leuchtmodule vorgesehen werden, deren mechanischer Aufbau zwar identisch ist, die sich aber beispielsweise hinsichtlich der Helligkeit und/oder der Farbe und/oder des Öffnungswinkels des von ihnen abgegebenen Lichtbündels voneinander unterscheiden. Für eine Veränderung der momentanen Beleuchtungssituation ist es dann lediglich erforderlich, ein Leuchtmodul gegen ein anderes auszutauschen.

Die leicht lösbare Verbindung zwischen der stationären Halterung und dem Leuchtmodul einerseits und dem Zusatzmodul und dem Leuchtmodul andererseits wird jeweils mit Hilfe von Kontakten hergestellt, die eine doppelte Funktion besitzen, nämlich einerseits zur Herstellung einer elektrisch leitenden Verbindung zwischen einer an die stationäre Halterung angeschlossenen Stromquelle bzw. dem in dem Zusatztmodul vorgesehenen elektrischen Energiespeicher und der oder den im Leuchtmodul befindlichen Lichtquellen dienen und andererseits magnetische Haltekräfte aufbringen, die für die stabile Verbindung des Leuchtmoduls mit der stationären Halterung bzw. dem Zusatzmodul sorgen. Darüber hinaus stellen diese unmittelbar an den Kontakten selbst wirkenden Magnetkräfte auch dann einen guten elektrischen Kontakt sicher, wenn es sich bei den Kontakten um flach aneinander anliegende Berührungskontakte handelt, wie dies vorzugsweise der Fall ist.

Ein besonderer Vorteil der Verwendung eines Zusatzmoduls besteht darin, dass sich das Leuchtmodul besonders klein und formschön gestalten lässt, da es selbst keinen Energiespeicher aufnehmen muß.

Zwar ist es im Prinzip möglich, nur eines der beiden elektrischen Kontaktpaare, von denen sich ein Kontakt an der Halterung und der andere am Leuchtmodul befindet, magnetisch auszugestalten, um die erforderlichen Haltekräfte zu erzielen, doch sind vorzugsweise beide elektrischen Kontaktpaare gleichzeitig auch magnetisch.

Um eine jederzeitige Verwendbarkeit auch als Handlampe sicherzustellen, ist vorzugsweise eine Halterung vorgesehen, die eine Aufnahme für das Zusatzmodul mit elektrischen Kontakten enthält, über die der elektrische Energiespeicher des Zusatzmoduls im eingesetzten Zustand mit einer elektrischen Energiequelle verbunden ist, aus der er geladen werden kann

Um einen speziellen Berührungsschutz für die an der Halterung vorgesehenen Kontakte vermeiden zu können, findet als Stromversorgung vorzugsweise eine Niedervolt-Stromquelle Verwendung. Als Lichtquelle sind Leuchtdioden besonders bevorzugt.

Diese und weitere vorteilhafte Ausgestaltungen der erfindungsgemäßen Innenraumleuchte sind in den Unteransprüchen niedergelegt.

Die Erfindung wird im folgenden anhand von Ausführungsbeispielen unter Bezugnahme auf die Zeichnung beschrieben; in dieser zeigen:
- Figur 1: eine stark schematisierte, teilweise geschnittene Seitenansicht einer Innenraumleuchte mit mehreren erfindungsgemäßen Leuchtmodulen;
- Figur 2: eine stark vereinfachte perspektivische Darstellung einer insbesondere für Kraftfahrzeuge geeigneten Innenraumleuchte mit einer stationären Lichtquelle und einer erfindungsgemäßen Kombination aus einem Leuchtmodul und einem Zusatzmodul,
- Figur 3: in der gleichen Perspektive die Innenraumleuchte aus Figur 2, wobei die erfindungsgemäße Kombination aus Leuchtmodul und Zusatzmodul gegen ihre Betriebs-Einbaulage verkippt wiedergegeben ist,
- Figur 4: einen Schnitt durch die Vorrichtung aus Figur 2 längs der Linie IV-IV,
- Figur 5: eine der Figur 2 ähnliche Darstellung einer weiteren Ausführungsform bei der die Innenraumleuchte zwei erfindungsgemäße Leuchtmodule aufweist,
- Figur 6: die perspektivische Darstellung eines der Leuchtmodule aus Figur 5 mit einem Zusatzmodul, das einen aufladbaren elektrischen Energiespeicher (Akkumulator) enthält und,
- Figur 7: eine perspektivische Darstellung einer Halterung, in die das Zusatzmodul aus Figur 6 eingesetzt werden kann, um den in ihm enthaltenen Akkumulator aufzuladen.

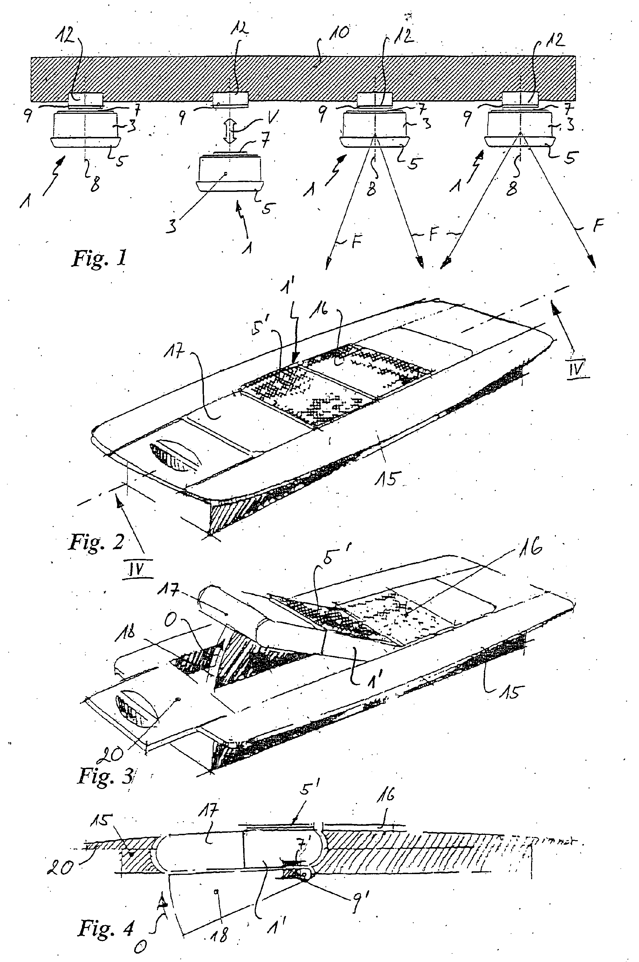

In Figur 1 sind vier erfindungsgemäße Leuchtmodule 1 dargestellt, von denen jedes ein etwa kreiszylindrisches Gehäuse 3 aufweist, das an seiner in der Figur 1 unten liegenden Seite durch eine Lichtdurchtrittsscheibe 5 verschlossen ist. Im Inneren eines jeden Gehäuses 3 befindet sich eine (nicht dargestellte) Lichtquelle, deren nach unten gerichtetes Lichtbündel durch die Lichtdurchtrittsscheibe 5 hindurch austritt, wie dies für die beiden in Figur 1 rechts befindlichen Leuchtmodule in schematischer Weise durch die Pfeile F dargestellt ist.

Jedes der Leuchtmodule 1 weist auf der Außenseite seines in der Figur 1 oben liegenden Gehäusebodens zwei von einander isolierte, elektrische Kontakte 7 auf, von denen in Figur 1 jedoch immer nur einer sichtbar ist. Diese beiden Kontakte können beispielsweise in Form einer zur Gehäuse-Hauptachse 8 konzentrischen Kreisfläche und einem hierzu konzentrischen Kreisring gebildet werden, um bezüglich der Hauptachse 8 eine vollständige Radialsymmetrie der Leuchtmodule 1 zu erzielen.

An einem Träger 10, bei dem es sich beispielsweise um ein Dachhimmelelement im Innenraum eines Kraftfahrzeuges handeln kann, sind vier Andockstationen bzw. Halterungen 12 vorgesehen, von denen jede mit einem der Leuchtmodule 1 in leicht lösbarer Weise verbindbar ist, wie dies für das zweite Leuchtmodul von links durch den Doppelpfeil V angedeutet ist. Jede der Halterungen 12 besitzt zwei Kontakte 9 (nur einer sichtbar), die in Form und Anordnung den Kontakten 7 der Leuchtmodule 1 entsprechen.

Wesentlich dabei ist, dass alle Kontakte aus einem elektrisch leitenden Material bestehen und die Kontakte 7 der Leuchtmodule 1 jeweils mit der oder den im Inneren der Gehäuse 3 befindlichen Lichtquellen, die vorzugsweise von Leuchtdioden (LEDs) gebildet werden, so in elektrisch leitender Verbindung stehen, dass sie zu deren Stromversorgung dienen können.

Die beiden Kontakte 9 an jeder der Halterungen 12 stehen mit einer Niedervolt-Stromversorgung in elektrisch leitender Verbindung, bei einem Einsatz in einem Fahrzeug beispielsweise mit dem Fahrzeug-Bordnetz.

Überdies bildet wenigstens einer der beiden Kontakte 9 an jeder der Halterungen 12 mit dem ihm zugeordneten Kontakt 7 an jedem der Leuchtmodule 1 dadurch eine Magnetanordnung, dass einer von ihnen als Permanentmagnet und der andere als Permanentmagnet mit entgegengesetzter Polung oder als ferromagnetisches Element ausgebildet ist. Die auf einfache Weise lösbare Verbindung zwischen jedem der Leuchtmodule 1 und der zugehörigen Halterung 12 wird somit durch die magnetischen Anziehungskräfte hergestellt und gehalten, die zwischen wenigstens einem Kontakt 7 am Leuchtmodul 1 und wenigstens einem Kontakt 9 an der Halterung 12 herrschen.

Vorzugsweise sind aber beide Kontakte an jeder der Halterungen 12 und beide Kontakte an jedem der Leuchtmodule 1 so ausgebildet, dass sie zu einer magnetischen Anziehung zwischen der Halterung 12 und dem Leuchtmodul beitragen, so dass jedes Kontaktpaar sowohl zum Halten als auch gleichzeitig zur elektrischen Stromversorgung dient. Die magnetischen Feldstärken einerseits und das Gewicht eines jeden Leuchtmoduls 1 andererseits können insbesondere bei der Verwendung einer oder mehrerer LEDs als Lichtquelle(n) so gewählt werden, dass keine zusätzlichen Haltekräfte und/oder Verriegelungen auch in den Fällen erforderlich sind, in denen die gesamte Leuchtanordnung Erschütterungen ausgesetzt ist, wie dies z.B. bei einer Verwendung im Inneren eines Fahrzeugs, insbesondere eines Kraftfahrzeugs der Fall sein kann.

Mit den unterschiedlichen Öffnungswinkeln der von den beiden in Figur 1 rechts angeordneten Leuchtmodulen 1 abgegebenen Lichtkegel soll angedeutet werden, dass die Leuchtmodule 1 hinsichtlich ihrer Licht-Eigenschaften nicht identisch sein müssen. Neben unterschiedlichen Abstrahlwinkeln können sie auch Lichtquellen mit unterschiedlicher Helligkeit und/oder unterschiedlicher Lichtfarbe enthalten. Durch die einfache Austauschbarkeit der Leuchtmodule 1 kann somit eine Innenraumbeleuchtung ohne großen Aufwand unterschiedlich gestaltet und an wechselnde momentane Bedürfnisse angepaßt werden.

In den Figuren 2 bis 4 ist eine Innenraumleuchte dargestellt, bei der die Halterung ein Rahmengehäuse 15 umfaßt, das eine stationäre Leuchte, von der nur die Lichtdurchtrittsscheibe 16 sichtbar ist, und eine erfindungsgemäße Universalleuchte aufnimmt, von deren Leuchtmodul 1' in Fig. 2 nur die Lichtdurchtrittsscheibe 5' sichtbar ist, hinter der sich eine (nicht dargestellte) Lichtquelle, vorzugsweise eine LED befindet.

Das Leuchtmodul 1' hat hier die Form eines flachen Quaders, dessen in den Figuren rechte, kurze Stirnkante abgerundet ist. Es ist gemeinsam mit einem in etwa die gleiche Form besitzenden Zusatzmodul 17 so in das als Halterung für beide Module 1', 17 dienende Rahmengehäuse 15 eingesetzt, dass die Oberseiten der beiden Module 1', 17 mit der des Rahmengehäuses 15 in etwa fluchten.

Die beiden Module 1', 17 sind über (nicht dargestellte) Kontaktpaare miteindander sowohl elektrisch als auch magnetisch so miteinander verbunden, dass sie gemeinsam gehandhabt aber gewünschtenfalls auch leicht voneinander getrennt werden können.

An der der Lichtdurchtrittsscheibe 5' gegenüberliegenden Seite trägt das Gehäuse 3' zwei Kontakte 7', von denen im Schnitt der Figur 4 nur einer zu sehen ist, und denen zwei Kontakte 9 gegenüber liegen (ebenfalls nur einer sichtbar) die in gleicher Weise wie dies oben unter Bezugnahme auf Figur 1 beschrieben wurde, mit einer (nicht dargestellten) elektrischen Energiequelle verbunden sind und sowohl für die elektrische Stromversorgung der im Inneren des Leuchtmoduls 1' befindlichen Lichtquelle(n) dienen als auch gleichzeitig für eine magnetische Anziehung zwischen der vom Rahmengehäuse 15 gebildeten Halterung und dem Leuchtmodul 1' sorgen.

Das Zusatzmodul 17 enthält einen Speicher für elektrische Energie, beispielsweise eine Batterie oder einen Akkumulator, der dann, wenn die beiden Module 1 ', 1 7 gemeinsam in das Rahmengehäuse 15 eingesetzt sind, über die oben erwähnten, nicht dargestellten Kontakte, die eine Verbindung zwischen dem Zusatzmodul 17 und dem Leuchtmodul 1' herstellen, sowie die Kontakte 7, 9, die eine Verbindung zwischen dem Leuchtmodul 1' und der erwähnten elektrischen Energiequelle herstellen, geladen werden kann, und dann, wenn die beiden Module 1', 17 aus dem Rahmengehäuse 15 entnommen werden, zur Stromversorgung der im Leuchtmodul 1' befindlichen Lichtquellen dient. Somit kann dieses Leuchtmodul 1' in Verbindung mit dem Zusatzmodul 17 auch als Handleuchte verwendet werden, die durch einen (nicht dargestellten) Schalter betätigbar ist.

Da bei dieser Ausführungsform die Außenseiten der Module 1', 17 nahezu bündig mit der Außenseite des Rahmengehäuses 15 fluchten, ist zur Erleichterung der Entnahme ein Federbalken 18 vorgesehen, der dann, wenn die von einem Schieber 20 des Rahmengehäuses 15 gebildete Verriegelung so, wie in Figur 3 dargestellt, nach links verschoben wird, die miteinander verbundenen Module 1', 17 in Richtung des Pfeils O nach oben drückt, so dass sie ohne weiteres gemeinsam ergriffen und aus dem Rahmengehäuse 15 entnommen werden können.

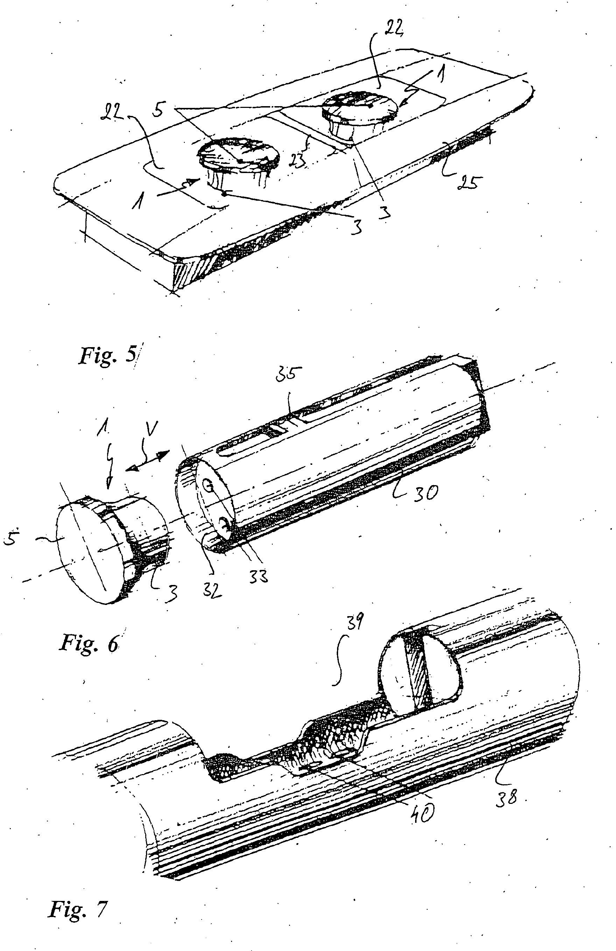

Bei dem in Figur 5 gezeigten Ausführungsbeispiel sind in einem Rahmengehäuse 25, das dem aus den Figuren 2 bis 4 ähnlich ist, zwei erfindungsgemäße Leuchtmodule 1 eingesetzt, die denen aus Figur 1 entsprechen, d. h. jeweils ein kreiszylindrisches Gehäuse 3 besitzen, das an seinem einen Stirnende durch eine Lichtdurchtrittsscheibe 5 verschlossen ist, während es an seinem in Figur 5 unteren Ende (nicht sichtbare) Kontakte trägt, die wiederum gleichzeitig als elektrische Stromversorgungskontakte und magnetische Haltekontakte dienen. Um jedes der Leuchtmodule 1 herum weist das Rahmengehäuse 25 eine Ausnehmung 22 auf, die von der anderen durch einen Steg 23 getrennt und von denen jede so dimensioniert ist, dass das in sie eingesetzte Leuchtmodul 1 leicht von Hand erfaßt und gegen die Haltekräfte der Magnetkontakte aus dem Rahmengehäuse 25 herausgenommen werden kann.

In Figur 6 sind eines der Leuchtmodule 1 aus Figur 5 und ein Zusatzmodul 30 dargestellt, das im wesentlichen die kreiszylindrische Form des Körpers einer Hand-Stab-Leuchte besitzt. An der dem Leuchtmodul 1 zugewandten Stirnseite weist das Zusatzmodul 30 eine kreisförmige Vertiefung 32 auf, deren Innendurchmesser nur geringfügig größer ist als der Außendurchmesser des kreiszylindrischen Gehäuses 3 des Leuchtmoduls 1, so dass dieses in Richtung des Pfeiles V in die Vertiefung 32 eingesetzt werden kann. Am Boden der Vertiefung 32 sind zwei Kontakte 33 vorhanden, die, wie dies bereits mehrfach beschrieben wurde, sowohl zur Herstellung einer elektrischen Verbindung mit entsprechenden auf der Bodenfläche des zylindrischen Gehäuses 3 vorgesehenen Kontakten als auch zur magnetischen Halterung des Leuchtmoduls 1 dienen. Im Inneren des Zusatzmoduls 30 ist ein Speicher für elektrische Energie in Form einer oder mehrerer Batterien oder eines oder mehrerer aufladbarer Akkumulatoren vorgesehen, so dass das Leuchtmodul 1 durch Betätigung eines Schalters 35 mit elektrischer Energie versorgt werden kann. Neben seiner Verwendung mit der stationären Halterung 25 kann es somit in Verbindung mit dem Zusatzmodul 30 als Handleuchte dienen.

In Figur 7 ist in schematischer Weise eine Halterung 38 dargestellt, die beispielsweise in die Armablage auf der Innenseite einer Kraftfahrzeug-Tür integriert werden kann und eine Aufnahme 39 besitzt, in welche sich das Zusatzmodul 30 einsetzen läßt. In dieser Halterung 38 können weitere Magnetkontakte 40 vorgesehen sein, die sowohl für eine rüttelsichere aber leicht lösbare Verbindung zwischen dem Zusatzmodul 30 und der Halterung 38 sorgen und über die auch ein elektrischer Kontakt zu (nicht dargestellten) entsprechenden Kontakten am Zusatzmodul 30 hergestellt werden kann, um einen in diesem Zusatzmodul 30 enthaltenen Akkumulator aufladen zu können.

Alternativ zu der dargestellten Ausführungsform können auch die Kontakte 33 für das Festhalten des Zusatzmoduls 30 in der Halterung 38 und das Wiederaufladen des Akkumulators verwendet werden, wofür die Kontakte 40 dann an einer entsprechenden anderen als der dargestellten Position angeordnet werden.

## Patentansprüche

1. Universalleuchte, die folgende Bestandteile umfasst:
- wenigstens ein Leuchtmodul (1; 1'), in dem wenigstens eine Lichtquelle angeordnet ist und das eine Lichtdurchtrittsscheibe (5; 5') aufweist,
- wenigstens eine stationäre Halterung (12; 15; 25), mit der das wenigstens eine Leuchtmodul (1; 1') in leicht lösbarer Weise verbindbar ist, und
- eine Stromzuführungs-Einrichtung, die wenigstens zwei an der Halterung (12; 15; 25) vorgesehene elektrische Kontakte (9; 9'), die mit einer Stromversorgung in elektrisch leitender Verbindung stehen, und wenigstens zwei an dem Leuchtmodul (1; 1') vorgesehene elektrische Kontakte (7; 7') umfaßt, die mit der Lichtquelle in elektrisch leitender Verbindung stehen und dann, wenn das Leuchtmodul (1; 1') mit der Halterung (12; 15; 25) verbunden ist, mit den elektrischen Kontakten (9; 9') der Halterung (12; 15; 25) in elektrisch leitender Verbindung stehen, wobei wenigstens einer der elektrischen Kontakte (9; 9') an der Halterung (12; 15; 25) und wenigstens einer der elektrischen Kontakte (7, 7') am Leuchtmodul (1; 1') als Magnetanordnung zum Festhalten des Leuchtmoduls (1; 1') an der Halterung (12; 15; 25) ausgebildet sind.
**dadurch gekennzeichnet, dass** ein Zusatzmodul (17; 30) vorgesehen ist, das einen Speicher für elektrische Energie und wenigstens zwei elektrische Kontakte (33) umfaßt, und mit dem das Leuchtmodul (1; 1') in leicht lösbarer Weise so verbindbar ist, dass der Speicher für elektrische Energie dann, wenn das Leuchtmodul (1; 1') mit den Zusatzmodul (17; 30) verbunden ist, die wenigstens eine Lichtquelle mit elektrischer Energie versorgen kann.

2. Innenraumleuchte nach Anspruch 1, **dadurch gekennzeichnet, dass** zwei der elektrischen Kontakte (9; 9') an der Halterung (12; 15; 25) und zwei der elektrischen Kontakte (7, 7') am Leuchtmodul (1; 1') so ausgebildet sind, dass sie die Magnetanordnung zum Festhalten des Leuchtmoduls (1; 1') an der Halterung (12; 15; 25) bilden.

3. Innenraumleuchte nach Anspruch 1 oder 2, zur Verwendung an einem Fahrzeug, insbesondere Kraftfahrzeug, **dadurch gekennzeichnet, dass** die Stromversorgung vom Fahrzeug-Bordnetz abgeleitet ist.

4. Innenraumleuchte nach einem der vorhergehenden Ansprüche, **dadurch gekennzeichnet, dass** auch das Leuchtmodul (1; 1') einen Speicher für elektrische Energie umfaßt, der dann, wenn das Leuchtmodul (1;1') mit der Halterung (12; 15; 25) verbunden ist, aus der Stromversorgung aufladbar ist und dann, wenn das Leuchtmodul (1; 1') von der Halterung (12; 15; 25) getrennt ist, die wenigstens eine Lichtquelle mit elektrischer Energie versorgen kann.

5. Innenraumleuchte nach einem der vorhergehenden Ansprüche, **dadurch gekennzeichnet, dass** die leicht lösbare Verbindung zwischen dem Zusatzmodul (17; 30) und dem Leuchtmodul (1'; 1) durch eine Magnetanordnung herstellbar ist, deren magnetische Anziehungskräfte das Leuchtmodul (1 '; 1) am Zusatzmodul (17; 30) festhalten.

6. Innenraumleuchte nach Anspruch 5, **dadurch gekennzeichnet, dass** wenigstens einer der elektrischen Kontakte am Leuchtmodul (1 '; 1 ) und wenigstens einer der elektrischen Kontakte (33) am Zusatzmodul (17; 30) so ausgebildet sind, dass sie die Magnetanordnung zum Festhalten des Leuchtmoduls (1 1) am Zusatzmodul (17; 30) bilden.

7. Innenraumleuchte nach Anspruch 6, **dadurch gekennzeichnet, dass** zwei der elektrischen Kontakte am Leuchtmodul (1'; 1) und zwei der elektrischen Kontakte (33) am Zusatzmodul (17; 30) so ausgebildet sind, dass sie die Magnetanordnung zum Festhalten des Leuchtmoduls (1'; 1) am Zusatzmodul (17; 30) bilden.

8. Innenraumleuchte nach Anspruch 6 oder 7, **dadurch gekennzeichnet, dass** die am Leuchtmodul (1 '; 1) vorgesehenen, sowohl magnetischen als auch elektrischen Kontakte zur wahlweisen Herstellung der leicht lösbaren Verbindung des Leuchtmoduls (1 '; 1) sowohl mit der Halterung (12; 15; 25) als auch mit dem Zusatzmodul (17; 30) dienen.

9. Innenraumleuchte nach einem der Ansprüche 1 bis 8, **dadurch gekennzeichnet, dass** eine weitere Halterung (38) vorgesehen ist, mit der das Zusatzmodul (30) in leicht lösbarer Weise verbindbar ist, und dass die weitere Halterung (38) wenigstens zwei elektrische Kontakte (40) aufweist, die mit der Stromversorgung in elektrisch leitender Verbindung stehen und dann, wenn das Zusatzmodul (30) mit der weiteren Halterung (38) verbunden ist, mit wenigstens zwei am Zusatzmodul (30) vorgesehenen elektrischen Kontakten in elektrisch leitender Verbindung stehen, um den im Zusatzmodul (30) vorgesehenen Speicher für elektrische Energie aufzuladen.

10. Innenraumleuchte nach Anspruch 9, **dadurch gekennzeichnet, dass** die leicht lösbare Verbindung zwischen der weiteren Halterung (38) und dem Zusatzmodul (30) durch eine weitere Magnetanordnung herstellbar ist, deren magnetische Anziehungskräfte das Zusatzmodul (30) an der weiteren Halterung (38) festhalten.

11. Innenraumleuchte nach Anspruch 10, **dadurch gekennzeichnet, dass** wenigstens einer der elektrischen Kontakte (40) an der weiteren Halterung (38) und wenigstens einer der elektrischen Kontakte am Zusatzmodul (30) so ausgebildet sind, dass sie die weitere Magnetanordnung zum Festhalten des Zusatzmoduls (30) an der weiteren Halterung (38) bilden.

12. Innenraumleuchte nach Anspruch 11, **dadurch gekennzeichnet, dass** zwei der elektrischen Kontakte (40) an der weiteren Halterung (38) und zwei der elektrischen Kontakte am Zusatzmodul (30) so ausgebildet sind, dass sie die weitere Magnetanordnung zum Festhalten des Zusatzmoduls (30) an der weiteren Halterung (38) bilden.

13. Innenraumleuchte nach Anspruch 12, **dadurch gekennzeichnet, dass** die zwei sowohl magnetischen als auch elektrischen Kontakte (33) am Zusatzmodul (30) zu seiner wahlweisen Verbindung entweder mit der weiteren Halterung (38) oder mit dem Leuchtmodul (1) dienen.
